# EUROPÄISCHE PATENTANMELDUNG

(11) **EP 3 502 154 A1**
(43) Veröffentlichungstag der Anmeldung: **26.06.2019**
(21) Anmeldenummer: 17209216.5
(22) Anmeldetag: 21.12.2017
(51) Int. Cl.: C08G 18/48, C08G 18/62, C08G 18/76, C08G 18/79, C08G 18/10, C08G 18/20

(54) **POLYURETHANHYBRIDPOLYMERE UND EIN VERFAHREN ZU IHRER HERSTELLUNG**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft Polyurethanhybridpolymere sowie ein Verfahren zu ihrer Herstellung.

## Beschreibung

Die vorliegende Erfindung betrifft Polyurethanhybridpolymere sowie ein Verfahren zu ihrer Herstellung.

Für Polymerwerkstoffe ist die Wasseraufnahme des eingesetzten Werkstoffmaterials eine wichtige Eigenschaft. So wird die Wasseraufnahme von Polyurethanen durch die eingesetzten Polyole stark beeinflusst; z.B. weisen ethylenoxidreiche Polyetherpolyole eine höhere Tendenz zur Wasseraufnahme auf als propylenoxidreiche Polyetherpolyole. Die Wasseraufnahme führt zu Materialerweichung, zum Quellen und zu einer Anfälligkeit gegenüber mechanischer Beschädigung. Durch den Einsatz von Polyesterpolyolen kann die Wasseraufnahme zwar reduziert werden, doch solche Produkte sind anfällig gegen Hydrolyse induzierten Polymerabbau.

Zur Reduzierung der Wasseraufnahme können teilkristalline Kohlenwasserstoffverbindungen hilfreich sein, die über OH-, NH- oder SH-Gruppen mit Isocyanaten reagieren können und so einen Polyurethan-Hybrid-Werkstoff zugänglich machen. Beispiele derartiger Verbindungen sind aus der Literatur bekannt. Es handelt sich dabei um Polyacrylate und/oder Polystyrole, die entsprechende gegenüber Isocyanat reaktive Gruppen enthalten.

Im JOURNAL OF POLYMER SCIENCE, Part A, Polymer Chemistry 2013, Vol. 51, Seiten 318-326 wird die Herstellung von Polystyroldiolen beschrieben, die beispielsweise in Chlorbenzol als Lösungsmittel mit Diisocyanat zu Polyurethan umgesetzt werden. Nach Entfernen des Lösungsmittels und nach Trocknung erhält man einen Polyurethanniederschlag.

Im Journal of Applied Polymer Science, Vol. 70, Seiten 613-627 (1998) werden Poly(urethan-block-methylmethacrylat)-Copolymere und Poly(urethan-block-styrol)-Copolymere in Butanon als Lösungsmittel mittels Polyurethanmakroazoinitiatoren (PUMAI) hergestellt. In einem ersten Schritt werden diese Polyurethanmakroazoinitiatoren (PUMAI) aus Methylendiphenyldiisocyanat (MDI) und Azobis(2-cyanopropanol (ACP) in Butanon hergestellt. Der so erhaltene NCO-terminierte Radikalinitiator in Butanon wird mit Hydroxypolycaprolacton (PCL) zu PUMAI umgesetzt. Danach werden diese PUMAI in einer Blockcopolymerisation z.B. mit Styrol umgesetzt. Die Ausbeute ist nur gering. Diese so hergestellten Blockcopolymere werden mit Gemischen (Blends) aus Polyurethan und Polystyrol verglichen.

In Polymer 46 (2005), Seiten 11294-11300 werden Polyurethan-Polystyrol-Copolymere beschrieben, die aus 2-Hydroxyethylacrylat terminiertem Isophorondiisocyanat-Polytetramethylenglykol-NCO-Prepolymer durch RAFT (Reversible Additions-Fragmentierungs-Kettenübertragungs)-Polymerisation mit Styrol unter Einsatz von 4-((Benzodithioyl)methyl)benzoesäure als RAFT-Agens hergestellt werden. Die Styrolkomponente wird auf das bereits vorliegende Polyurethan polymerisiert. Die resultierenden Copolymerfilme zeigen eine geringe Wasserabsorption (15-18%). Insgesamt zeigen die Filme aus den Polyurethan-Polystyrol-Copolymeren allerdings eine deutlich erhöhte Härte und Zugfestigkeit bei stark abgesenkter Bruchdehnung gegenüber den reinen Filmen aus Polyurethan.

Aufgabe der vorliegenden Erfindung war es, Polyurethane zur Verfügung zu stellen, die eine niedrige Wasseraufnahme aufweisen, die gleichzeitig einfach und ohne den Einsatz von Lösungsmitteln herzustellen sind und bei denen eine schnelle Phasenstabilität der Mischung der Ausgangskomponenten erreicht wird.

Die vorgenannte Aufgabe konnte überraschenderweise gelöst werden, indem Polystyrol und/oder Polyacrylnitril in das Polyurethangerüst eingebaut wurden und zwar über den Einsatz von Polystyrolpolyolen und/oder Polyacrylnitrilpolyolen als Ausgangsverbindung, obwohl Polystyrolpolyolverbindungen bei zahlenmittleren Molekulargewichten von >1000 g/mol und Polyacrylnitrilverbindungen bei zahlenmittleren Molekulargewichten von >3000 g/mol in der Regel fest sind, wodurch ihre unmittelbare Verarbeitbarkeit in der üblichen Verarbeitungstechnik zur Herstellung von Polyurethanen stark eingeschränkt ist. Aus diesem Grund konnten Polystyrolpolyole und Polyacrylnitrilpolyole bisher nur in Lösungsmitteln eingesetzt werden.

Das erfindungsgemäße Verfahren zeichnet sich insbesondere dadurch aus, dass NCO-Prepolymere aus Polystyrolpolyolen und/oder Polyacrylnitrilpolyolen mit Polyisocyanaten hergestellt werden, die in einem weiteren Schritt zu Polyurethanhybridpolymeren verarbeitet werden.

Gegenstand der Erfindung sind Polyurethanhybridpolymere aus Polyisocyanaten (A) und gegenüber Isocyanat reaktive Gruppen enthaltenden Verbindungen (B) in einem molaren Verhältnis von NCO-Gruppen zu OH-und/oder NH-Gruppen von 0,8 zu 1 bis 3,5 zu 1 hergestellt aus der Reaktion von
a) mindestens einem NCO-Prepolymer als Polyisocyanat (A),
b) mindestens einer gegenüber Isocyanat reaktive Gruppen enthaltenden Verbindung (B) aus der Gruppe bestehend aus Polyesterpolyolen, Polyetherpolyolen, Polyetheresterpolyolen und aminoterminierten Polyethern und
c) gegebenenfalls Kettenverlängerern und/oder Vernetzern (C)
   in Gegenwart von
d) gegebenenfalls Katalysatoren (D)
e) gegebenenfalls Hilfs- und/oder Zusatzmitteln (E),
wobei das NCO-Prepolymer einen NCO-Gehalt von 10 bis 40 Gew.-% aufweist und aus mindestens einem Polyisocyanat (A') aus der Gruppe bestehend aus aliphatischen und aromatischen Polyisocyanaten und mindestens einer Polyolkomponente (B') aus der Gruppe bestehend aus Polystyrolpolyol mit einem zahlenmittleren Molekulargewicht von >1000 g/mol, bevorzugt >1500 g/mol, besonders bevorzugt 2000 g/mol und Polyacrylnitrilpolyol mit einem zahlenmittleren Molekulargewicht von >2000 g/mol, bevorzugt >3000 g/mol, und gegebenenfalls mindestens einem weiteren Polyol (B") aus der Gruppe bestehend aus Polyesterpolyolen, Polyetherpolyolen und Polyetheresterpolyolen hergestellt ist.

Ein weiterer Gegenstand der Erfindung ist ein Verfahren zur Herstellung von Polyurethanhybridpolymeren, wobei Polyisocyanate (A) mit gegenüber Isocyanat reaktive Gruppen enthaltenden Verbindungen (B) und gegebenenfalls Kettenverlängerern und/oder Vernetzern (C) in Gegenwart von gegebenenfalls Katalysatoren (D) und gegebenenfalls Hilfs- und/oder Zusatzmitteln (E) in einem molaren Verhältnis von NCO-Gruppen zu OH-und/oderNH-Gruppen von 0,8 zu 1 bis 3,5 zu 1 zur Reaktion gebracht werden, dadurch gekennzeichnet, dass
i) als Polyisocyanat (A) ein NCO-Prepolymer mit einem NCO-Gehalt von 10 bis 40 Gew.-% eingesetzt wird,
   welches aus mindestens einem Polyisocyanat (A') aus der Gruppe bestehend aus aliphatischen und aromatischen Polyisocyanaten und mindestens einer Polyolkomponente (B')aus der Gruppe bestehend aus Polystyrolpolyol mit einem zahlenmittleren Molekulargewicht von >1000 g/mol, bevorzugt >1500 g/mol, besonders bevorzugt 2000 g/mol und Polyacrylnitrilpolyol mit einem zahlenmittleren Molekulargewicht von >2000 g/mol, bevorzugt >3000 g/mol, und gegebenenfalls mindestens einem weiteren Polyol (B'') aus der Gruppe bestehend aus Polyesterpolyolen, Polyetherpolyolen und Polyetheresterpolyolen hergestellt ist, und
ii) als gegenüber Isocyanat reaktive Gruppen enthaltenden Verbindung (B) mindestens eine Verbindung aus der Gruppe bestehend aus Polyesterpolyolen, Polyetherpolyolen, Polyetheresterpolyolen und aminoterminierten Polyethern eingesetzt wird.

Das erfindungsgemäße Verfahren ermöglicht die direkte Einbindung von Polystyrol- und/oder Polyacrylnitrileinheiten in Polyurethane.

Bei den eingesetzten Polystyrol-und Polyacrylnitril-polyolen handelt es sich um Verbindungen, die beispielsweise folgende Formel aufweisen können und folgendermaßen hergestellt werden:

2n RCH=CH₂ + H-[O-R'-]ₘO-C(O)-R"-S-C(S)-S-R"-C(O)-O[-R'-O]_{m'}-H ---------> H-[O-R'-]ₘO-C(O)-R"-[CH₂-CH(R)-]ₙS-C(S)-S-[-CH₂-CH(R)-]_{n'}-R"-C(O)-O[-R'-O]_{m'}-H

Hierbei kann R beispielsweise für einen aromatischen Rest C₆H₅ oder für einen Nitrilrest CN stehen. Bei n, n', m und m' handelt es sich um jeweils eine ganze Zahl ≥1. R' und R" können beispielsweise Alkylenreste sein.

Als gegenüber Isocyanatgruppen reaktive Verbindung (B), mit denen die Isocyanat terminierten Prepolymere verarbeitet werden können, kann jede bei der Polyurethanherstellung verwendbare Verbindung mit mindestens zwei gegenüber Isocyanaten reaktiven Gruppen mit Wasserstoffatomen eingesetzt werden. Vorzugsweise werden als gegenüber Isocyanatgruppen reaktive Verbindungen Polyetherpolyole, Polyesterpolyole, Polyetheresterpolyole und aminoterminierte Polyether oder Mischungen daraus eingesetzt. Besonders bevorzugt sind Polyetherpolyole.

Als Komponente (B") werden bevorzugt Polyetherpolyole, Polyesterpolyole und Polyetheresterpolyole oder Mischungen daraus eingesetzt.

Geeignete Polyetherpolyole können nach bekannten Verfahren, beispielsweise durch anionische Polymerisation mit Alkalihydroxiden, wie Natrium oder Kaliumhydroxid, oder Alkalialkoholaten, wie Natriummethylat, Natriumoder Kaliumethylat, oder Kaliumisopropylat als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid und Borfluorid-Etherat, oder Bleicherde als Katalysatoren aus einem oder mehreren Alkylenoxiden mit 2 bis 4 Kohlenstoffatomen im Alkylenrest hergestellt werden. Weiter können als Katalysatoren auch Multimetallcyanidverbindungen, sogenannte DMC-Katalysatoren, eingesetzt werden. Geeignete Alkylenoxide sind beispielsweise Tetrahydrofuran, 1 ,3-Propylenoxid, 1 ,2- bzw. 2,3-Butylenoxid, Styroloxid und vorzugsweise Ethylenoxid und 1 ,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N, Nund N,N'-dialkylsubstituierte Diamine mit 1 bis 4 Kohlenstoffatomen im Alkylrest, wie gegebenenfalls monound dialkylsubstituiertes Ethylendiamin, Diethylentriamin, Triethylentetramin, 1 ,3-Propylendiamin, 1 ,3- bzw. 1 ,4-Butylendiamin, 1 ,2-, 1 ,3-, 1 ,4-, 1 ,5- und 1 ,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie Ethanolamin, Diethanolamin, N-Methyl und N-Ethyl-ethanolamin, N-Methyl und N-Ethyldiethanolamin und Triethanolamin und Ammoniak. Vorzugsweise verwendet werden mehrwertige, insbesondere zwei bis achtwertige Alkohole, wie Ethandiol, 1,2- und 1 ,3-Propandiol , Diethylenglykol, Dipropylenglykol, 1,4-Butandiol, 1,6-Hexandiol, Glycerin, Trimethylol-propan, Pentaerytrit, Glucose, Fructose und Saccharose.

Die Polyetherpolyole, vorzugsweise Polyoxyethylen-, Polyoxypropylen und Polyoxypropylenpolyoxyethylenpolyole, besitzen eine zahlenmittlere Funktionalität von 1 ,5 bis 5,0, bevorzugt von 1 ,8 bis 4,2 und insbesondere von 2,0 bis 3,5 und zahlenmittlere Molekulargewichte von vorzugsweise 32 bis 1500, besonders bevorzugt 60 bis 1000 und insbesondere 60 bis 800.

Die unterschiedlichen Funktionalitäten werden dabei bevorzugt durch die Verwendung unterschiedlicher Starter erhalten.

Die erfindungsgemäß einsetzbaren Polyesterpolyole haben überwiegend Hydroxylendgruppen. Demgegenüber weisen sie nur in einem sehr untergeordneten Maß Carboxylatendgruppen auf.

Geeignete Polyesterpolyole können Molekülmassen im Bereich von 250 Da bis 10000 Da, bevorzugt von 300 Da bis 6000 Da, aufweisen. Die Anzahl der Hydroxyl-Endgruppen im Polyesterpolyol kann 2 bis 6 betragen. Die durchschnittliche Funktionalität der Polyesterpolyole ist bevorzugt > 2 bis < 3.

Zur Herstellung der Polyesterpolyole einsetzbare niedermolekulare Polyole sind bevorzugt solche mit Hydroxylfunktionalitäten von 2 bis 6. Sie haben in bevorzugten Ausführungsformen zwischen 2 und 36, besonders bevorzugt zwischen 2 und 12, Kohlenstoffatome. Bevorzugt stammen mindestens 90 Mol-%, besonders bevorzugt 100 Mol-%, aller Alkoholgruppen der Alkoholkomponente, aus der der Polyester aufgebaut wird, aus unverzweigten α,ω-Diolen (bezogen auf einen Gesamtgehalt an Alkoholgruppen in der Alkoholkomponente, aus der der Polyester aufgebaut wird, von 100 Mol-%)). Ganz besonders bevorzugt sind Polyole aus der Gruppe:

Ethylenglykol und Diethylenglykol einschließlich deren höherer Homologe, 1 ,3-Propandiol, 1 ,4-Butandiol, 1,5-Pentandiol, 1,6-Hexandiol, 1,7-Heptandiol, 1,8-Octandiol, 1,9- Nonandiol, 1 ,10-Decandiol, 1,1 1 -Undecandiol, 1 ,12-Dodecandiol, einschließlich deren höherer Homologe.

Selbstverständlich können auch Gemische dieser Polyole untereinander oder mit weiteren Polyolen eingesetzt werden, wobei im letzteren Fall die genannten Polyole bevorzugt mindestens 90 Mol-% aller Hydroxylgruppen beisteuern.

Grundsätzlich möglich, wenn auch nicht bevorzugt, ist der zusätzliche Einsatz von Polyolen aus der Gruppe:
1,2-Propandiol, Dipropylenglykol und dessen höhere Homologe, 2-Methylpropandiol-1,3, Neopentylglykol, 3-Methylpentandiol-1,5, Glycerin, Pentaerythrit, 1,1,1 -Trimethylolpropan und Kohlenhydrate mit 5 bis 12 Kohlenstoffatomen (wie bspw. Isosorbid). Diese können ebenfalls untereinander oder mit weiteren Polyolen gemischt werden. In jedem Fall steuern jedoch bei Verwendung dieser Polyole die weiter oben als ganz besonders bevorzugt gekennzeichneten unverzweigten α,ω-Diole mindestens 90 Mol-% aller Hydroxylgruppen bei.

Zur Herstellung der Polyesterpolyole einsetzbare niedermolekulare Polycarbonsäureäquivalente haben insbesondere 2 bis 36, bevorzugt 2 bis 12 Kohlenstoffatome. Die niedermolekularen Polycarbonsäureäquivalente können aliphatisch oder aromatisch sein. Sie sind bevorzugt ausgewählt aus der Gruppe:
Bernsteinsäure, Fumarsäure, Maleinsäure, Maleinsäureanhydrid, Glutarsäure, Adipinsäure, Sebacinsäure, Korksäure, Azelainsäure, 1 ,10-Decandicarbonsäure, 1. 1 2-Dodecandi carbonsäure, Phthalsäure, Phthalsäureanhydrid, Isophthalsäure, Terephthalsäure, Pyromellitsäure und Trimellitsäure.

Selbstverständlich können auch Gemische dieser niedermolekularen Polycarbonsäureäquivalente untereinander oder mit weiteren Polycarbonsäureäquivalenten eingesetzt werden, wobei im letzteren Fall die genannten Polycarbonsäuren bevorzugt mindestens 90 Mol-% aller Carboxylgruppen beisteuern.

Werden Hydroxycarbonsäuren einschließlich deren innerer Anhydride (Lactone) verwendet oder mitverwendet, dann wird bevorzugt Caprolacton und/oder 6-Hydroxycapronsäure eingesetzt.

Als Polyetheresterpolyole können die in EP1702941A1 beschriebenen Verbindungen verwendet werden.

Als aminoterminierte Polyetherpolyole können beispielsweise die sogenannten Jeffamine® von Huntsman, wie z. B. D-230, D-400, D-2000, T-403, T-3000, T-5000, oder entsprechende Produkte der BASF, wie z. B. Polyetheramin D230, D400, D200, T403, T5000 oder Polytetrahydrofuranamine (BASF Produkt: Polytetrahydrofuranamin 1 700) eingesetzt werden.

Als Kettenverlängerer und/oder Vernetzer (C)werden Substanzen eingesetzt, die mindestens zwei gegenüber Isocyanaten reaktive Gruppen aufweisen, wobei die Substanzen zumindest eine freie SH-, OH- oder NH-Gruppe aufweisen. Im Einzelnen bieten sich die folgenden Verbindungen beispielhaft an: Ethylendiamin, 1,2-Propandiol, 1,3-Propandiol, Glycerin, 2,3-Butandiol, 1,3-Butandiol, 1,4-Butandiol, 2-Methylpropan-1,3-diol, 1,2-Pentandiol, 1,3-Pentandiol, 1,4-Pentandiol, 1,5-Pentandiol, 2,2-Dimethyl-propan-1,3-diol, 2-Methylbutan-1,4-diol, 2-Methylbutan-1,3-diol, Monoethylenglykol, 1,1,1-Trimethylolethan, 3-Methyl-1,5-Pentandiol, 1,1,1-Trimethylolpropan, 1,6-Hexandiol, 1,7-Heptandiol, 2-Ethylhexan-1,6-diol, 1,8-Octandiol, 1,9-Nonandiol, 1,10-Decandiol 1,11-Undecandiol, 1,12-Dodecandiol, Diethylenglykol, Triethylenglykol, 1,4-Cyclohexandiol, 1,3-Cyclohexandiol, Toluylendiamine oder Derivate davon, wie 3,5- Diethyl-toluylen-2,4-Diamin, Triethylenglykoldiamin und Wasser. Vorzugsweise ist das Molekulargewicht des Kettenverlängerers in dieser bevorzugten Ausführungsform zwischen 100 und 400 g/mol, besonders bevorzugt zwischen 100 und 200 g/mol und insbesondere zwischen 100 und 150 g/mol.

Als Polyisocyanate (A') werden für die Herstellung der Prepolymeren im Fall der anschließenden Umsetzung mit Polystyrolpolyolen vorzugsweise aromatische Polyisocyanate verwendet. Vorzugsweise werden aromatische Polyisocyanate der allgemeinen Formel R(NCO)z eingesetzt, wobei R ein polyvalenter organischer Rest ist, der einen Aromaten aufweist, und z eine ganze Zahl von mindestens 2 ist. Beispiele hierfür sind:
4,4'-Diisocyanatobenzol, 1 ,3-Diisocyanato-o-xylol, 1 ,3-Diisocyanato-p-xylol, 1 ,3-Diisocyanatomxylol, 2,4- Diisocyanato-1 -chlorobenzol, 2,4-Diisocyanato-1 -nitro-benzol, 2,5-Diisocyanato-1 - nitrobenzol, m-Phenylendiisocyanat, p-Phenylendiisocyanat, 2,4-Toluoldiisocyanat, 2,6-Toluoldiisocyanat, Mischungen aus 2,4- und 2,6-Toluoldiisocyanat, 1 ,5-Naphthalindiisocyanat, 1-Methoxy-2,4-phenylendiisocyanat, 4,4'-Diphenylmethandiisocyanat, 2,4'- Diphenylmethandiisocyanat, 2,2'- Diphenylmethandiisocyanat, 4,4'-Biphenylendiisocyanat, 3,3'-Dimethyl-4,4'-diphenylmethandiisocyanat, 1,5-Naphthalindiisocyanat und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2,2'-5,5'-diphenylmethantetraisocyanat.

Besonders bevorzugt sind Toluoldiisocyanate, 2,4'-Diphenylmethandiisocyanat, 4,4'-Diphenylmethandiisocyanat, Polymethylenpolyphenylenpolyisocyanat, sowie Derivate, wie beispielsweise modifizierte Verbindungen dieser Isocyanate in Form von Carbodimiden, Urethoniminen, und/oder Isocyanuraten und Mischungen davon.

Für die Herstellung der Prepolymere im Fall der anschließenden Umsetzung mit Polyacrylnitrilpolyolen kommen dagegen bevorzugt die an sich bekannten aliphatischen, cycloaliphatischen und/oder araliphatischen Polyisocyanate sowie deren Gemische in Frage. Beispielhaft genannt seien hier 1,6-Hexamethylendiisocyanat, Isophorondiisocyanat, Pentamethylendiisocyanat, Xylylendiisocyanat 1,4-Cyclohexandiisocyanat (CHDI), Methyldicyclohexyldiisocyanat (H12-MDI) sowie die modifizierten Verbindungen dieser Isocyanate in Form von Allophanaten, Biureten und Carbodiimiden, sowie Dimere und Trimere der Isocyanate(U. Meier-Westhues, Polyurethanes - Coatings, Adhesives and Sealants, Hannover: Vincentz Network, 2007 (European Coatings Tech Files) ISBN 3-87870-334-1).

Besonders bevorzugt sind 1,6-Hexamethylendiisocyanat, Isophorondiisocyanat und Methyldicyclohexyldiisocyanat

Als Polyol (B') zur Herstellung der Isocyanat-terminierten Prepolymere kommen die über RAFT - Polymerisation zugänglichen Polyole auf Basis von Acrylnitril oder Styrol in Frage.

Als Katalysatoren (D) können alle zur Polyurethanherstellung üblichen Katalysatoren eingesetzt werden. Solche Katalysatoren werden beispielsweise im "Kunststoffhandbuch, Band 7, Polyurethane", Carl Hanser Verlag, 3. Auflage 1993, Kapitel 3.4.1 beschrieben. Dabei kommen beispielsweise organische Metallverbindungen, vorzugsweise organische Zinnverbindungen, wie Zinn-(ll)-salze von organischen Carbonsäuren, z.B. Zinn-(ll)-acetat, Zinn-(ll)-octoat, Zinn-(ll)-ethylhexoat und Zinn-(ll)-laurat und die Dialkylzinn-(IV)-salze von organischen Carbonsäuren, z.B. Dibutylzinndiacetat, Dibutylzinndilaurat, Dibutylzinnmaleat und Dioctylzinndiacetat, sowie Bismutcarboxylate, wie Bismut(lll)-neodecanoat, Bismut-2-etyhlhexanoat und Bismut-octanoat oder Mischungen in Betracht. Weitere mögliche Katalysatoren sind stark basische Aminkatalysatoren. Beispiele hierfür sind Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl,N-Cyclohexylmorpholin, N,N,N',N'-Tetramethylethylendiamin, N,N,N',N'-Tetramethylbutandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1 ,2-Dimethylimidazol, 1-Aza-bicyclo-(3,3,0)-octan und vorzugsweise 1 ,4-Diaza-bicyclo(2,2,2)-octan und Alkanolaminverbindungen, wie Triethanolamin, Triisopropanolamin, N-Methylund N-Ethyl-diethanolamin und Dimethylethanolamin. Die Katalysatoren können einzeln oder als Mischungen verwendet werden. Gegebenenfalls werden als Katalysatoren (D) Mischungen aus Metallkatalysatoren und basischen Aminkatalysatoren verwendet. Die Katalysatoren (D) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponenten (A) bis (E) eingesetzt werden.

Als Hilfs- und/oder Zusatzmittel (E) können Treibmittel, Additive zur Thixotropierung, Füllstoffe, Antioxidantien, Farbstoffe, Pigmente, Trennmittel, optische Aufheller und Stabilisatoren gegen Wärme, Licht und/oder UV-Strahlung, Weichmacher oder oberflächenaktive Substanzen eingesetzt werden.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Treibmittel können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel fluorierte Alkane (Hydrofluorkohlenstoffe - z.B. HFC245fa oder HFC365mfc), wie Perfluorhexan, Fluorchlorkohlenwasserstoffe, Hydrofluorolefine (HFO1336mzz, HFO1233zd)) und Ether, Ester, Ketone und/oder Acetale.

Die Polyurethanbybridpolymere können zur Herstellung von hydrophoben kompakten Beschichtungen und hydrophoben Hart- und Weichschäumen eingesetzt werden.

### Beispiele:

### Eingesetzte Rohstoffe:

| | |
|---|---|
| KOH Reinheit 98 % | *Sigma-Aldrich* Chemie GmbH |
| CS₂ Reinheit 99 % | *Sigma-Aldrich* Chemie GmbH |
| 2-Brompropionsäure Reinheit >99 % | Sigma Aldrich Chemie GmbH |
| Cr(III)Cl₃ Reinheit 99 % | *Acros Organis* |
| Toluol Reinheit 99.8 % | *Sigma-Aldrich* Chemie GmbH |
| PO (Propylenoxid) Reinheit 99.5 % | *Sigma-Aldrich* Chemie GmbH |

### Herstellung RAFT Reagenz:

### Bereitstellung von Kaliumtrithiocarbonats (K₂CS₃) und Umsetzung von K₂CS₃ mit 2-Brompropionsäure zu Trithiocarbonat-Zwischenverbindung I

Die Herstellung des Kaliumtrithiocarbonats erfolgte entsprechend der Offenbarung in Macromolecules (2015),Vol. 45, Seite 4958. In einem Kolben wurden 1230 ml entionisiertes Wasser sowie 215 g KOH unter Rühren vorgelegt und dann 273 g Schwefelkohlenstoff hinzufügt und gerührt.

Bei Raumtemperatur wurden 250 g 2-Brompropionsäure tropfenweise dazugegeben und anschließend für 72 Stunden gerührt. Die Reaktionslösung wurde mit CH₂Cl₂ gewaschen und mit konzentriertem HCl angesäuert, filtriert und getrocknet. Flüchtige Bestandteile wurden am Rotationsverdampfer abgetrennt. Die Ausbeute der Zwischenverbindung I beträgt 45,32 g bzw. 36 % (theoretisch: 207,8 g, 0,82 mol).

### Propoxylierung der Zwischenverbindung I zum RAFT-Reagenz II

In einem Autoklaven wurden 18,75g der Zwischenverbindung I in 120g Toluol sowie 0,16 Katalysator CrCl3 unter Stickstoff vorgelegt. Im Anschluss wurden 58g Propylenoxid in Stickstoffatmosphäre zudosiert, auf 80 °C aufgeheizt und für 3,5 Stunden gerührt. Im Anschluss wurde die Reaktionstemperatur auf 100°C erhöht und für 6 Stunden bei dieser Temperatur gerührt.

Nach Abkühlen des Autoklaven wurde filtriert und rotationsverdampft. Die Ausbeute lag bei 86%.

Das RAFT-Reagenz II kann beispielsweise folgende Struktur aufweisen:
H[-O-CH₂-CH(CH₃)]ₘ -O-C(O)-CH(CH₃)-S-C(S)-S-CH(CH₃)-C(O)-O-[CH₂-CH(CH₃)-O-]_{m'}H mit m und m' ≥1

### Umsetzung von RAFT-Reagenz II mit Styrol zu -Polystyrol-diol III

In einem Dreihalskolben wurden 19,31g RAFT Reagenz II, 108,5g Styrol, 521,8g Dioxan sowie 2,58g 2,2'-Azobis(2,4-dimethylvaleronitril) vorgelegt. Dann wurde die Atmosphäre im Inneren der Apparatur durch Stickstoff ausgetauscht. Die Reaktion wurde bei 60°C unter Stickstoff für 22 Stunden durchgeführt. Nach der Reaktion wurde unter Vakuum unter Rotation verdampft und getrocknet. Die Ausbeute betrug 87,97g (69%). Das zahlenmittlere Molekulargewicht betrug 2100 g/mol.

### Herstellung von Polyurethan-Polystyrolhybridpolymer und Polyurethanpolymer über NCO-Prepolymere

### Eingesetzte Ausgangsverbindungen:

| | |
|---|---|
| Polystyroldiol III: | zahlenmittleres Molekulargewicht M_{w}: 2100g/mol, Glasübergangstemperatur T_{G}: 40°C, Zersetzungstemperatur T_{D}: 190°C |
| Katalysator | Dabco 33LV von Air Products |
| Polyisocyanat 1 | 4,4'-Diphenylmethandiisocyanat mit einem Isocyanatgehalt von 33,6 Gew.-% (Desmodur® 44M von Covestro Deutschland AG) |
| Polyisocyanat 2 | oligomere Uretonimine enthaltendes 4,4' -Diphenylmethandiisocyanat mit einem Isocyanatgehalt von 29,5 Gew.-% (Desmodur® CD-S von Covestro Deutschland AG) |
| Polyetherpolyol 1 | Gylzerin gestartetes Polyetherpolyol aus Propylenoxid mit einer OH-Zahl von 42mg KOH/g |
| Polyetherpolyol 2 | Lineares, Propylengylkol gestartetes Propylenoxidpolyetherpolyol mit einer OH-Zahl von 56mg KOH/g |
| Polyetherpolyol 3 | Glycerin gestartetes Polyetherpolyol aus Propylenoxid und Ethylenoxid mit einer OH-Zahl von 35mg KOH/g |
| Tripropylenglycol | |

Das Polystyroldiol III wurde gemörsert, bei 80°C zur Polyisocyanatkomponente zugegeben, wobei es sich löste und zum NCO-Prepolymer umgesetzt wurde.

Das zweite NCO-Prepolymer wurde in gleicher Weise mit dem entsprechenden flüssigen Polyolgemisch hergestellt.

Die jeweiligen Materialien und Mengenangaben sind der Tabelle 1 zu entnehmen.

**Tabelle 1:**

| | Beispiel 1 [Gew.-%] | Beispiel 2 Vergleich [Gew.-%] |
|---|---|---|
| Polystyroldiol III | 35,45 | |
| Polyetherpolyol 1 | | 3,0 |
| Polyetherpolyol 2 | | 20,0 |
| Tripropylenglykol | | 6,0 |
| Diphenylmethan-diisocyanat | 58,3 | 66,0 |
| Polyisocyanat 2 | 6,25 | 5,0 |
| Summe | 100,0 | 100,0 |
| | | |
| Isocyanatgehalt des Prepolymers in [Gew.-%] | 20,0 | 19,8 |
| Viskosität bei 25°C in [mPas] | 260 | 650 |

Beide NCO-Prepolymere konnten unter den in der Polyurethanchemie üblichen Bedingungen (Zimmertemperatur, intensives Rühren) zum Polyurethan umgesetzt werden.

Beide NCO-Prepolymere wurden entsprechend den in Tabelle 2 angegebenen Mengen zum Polyurethan bzw. zum Polyurethan-Polystyrolhybridpolymer umgesetzt.

**Tabelle 2:**

| | | Beispiel 1' [Gew.-Teile] | Beispiel 2' Vergleich [Gew.-Teile] |
|---|---|---|---|
| Polyetherpolyol 3 | | 100 | 100 |
| Katalysator | | 0,1 | 0,1 |
| NCO-Prepolymer aus Beispiel 2 | | | 14,5 |
| NCO-Prepolymer aus Beispiel 1 | | 14,5 | |
| Gehalt an Polystyroldiol im Endprodukt | [Gew.-%] | 4,5 | - |
| Verträglichkeit erreicht nach | [min] | 2 | 2 |
| Gelzeit | [min] | 24 | 23 |
| Eigenschaften des Endproduktes : | | | |
| nach 24 Stunden | | klebfrei | klebrig |
| Härte nach 15 Tagen | Shore A | 42 | 37 |
| Härte nach 21 Tagen | Shore A | 42 | 42 |
| DSC TG1 | [°C] | -59,7 | -61,1 |
| Wasseraufnahme | [Gew.-%] | 4,1 | 4,4 |
| Zugversuch Bruchdehnung | [%] | 104 | 106 |
| Spannung bei 100% Dehnung | [N/mm²] | 1,12 | 1,09 |

Bei der Verarbeitung ergaben sich zunächst keine signifikanten Unterschiede. Die Reaktionsmischungen klarten nach zweiminütigem Rühren auf, jedoch verfestigte die das Polystyroldiol-Prepolymer enthaltende Reaktionsmischung deutlich schneller.

Überraschenderweise zeigte sich bereits bei einem geringen Anteil (4,5 Gew.-% im Endprodukt) an Polystyroldiol eine deutlich geringere Tendenz (ca.7%) des Endproduktes Wasser aufzunehmen, während die anderen physikalisch-mechanischen Eigenschaften gegenüber dem Vergleichsprodukt gleich gut waren.

### Prüfkörper- Herstellung:

Zunächst wurde der Katalysator mit dem Polyol innig mit einem Ika-Rührwerk RW20 während 5 Minuten gemischt. Diese Mischung wurde bei Raumtemperatur zu der in einem Pappbecher vorgelegten Menge des jeweiligen Prepolymers gegeben und mit einem Holzstab langsam gerührt. Die Masse von ca. 80g wurde in eine nicht temperierte Aluminiumform (9x9x2cm³) mit abnehmbarem Rahmen überführt. Das Reaktionsgemisch wurde unter diesen Bedingungen ausgehärtet.

### Testmethoden:

| | |
|---|---|
| NCO-Gehalt in [Gew.-%] gemäß EN ISO 11909:2007 | |
| | |
| Viskosität in [mPas] gemäß | DIN 53019-1 (2008) bei 25°C |
| Härte in [Shore A] gemäß | DIN 53506 |
| Wasseraufnahme in [Gew.-%] | In Anlehnung an ISO 15512 (2016): |
| | Aus den gegossenen Platten wurden runde Scheiben mit 5cm Durchmesser gestanzt, ihre Dicke betrug ca. 1 cm. Sie wurden 4 Tage bei 50°C in einem Exsikkator mit Trockenmittel bis zur Gewichtskonstanz getrocknet. Danach wurde das Trockenmittel gegen Wasser ausgetauscht. Die Proben wurden drei Tage bei 50°C unter diesen Bedingungen gelagert, bevor die Wasseraufnahme als Gewichtszunahme bestimmt wurde. |
| Zug/Spannungsmessung in | |
| [N/mm²]gemäß | DIN 53571 (1986) |
| DSC-Messung gemäß | EN ISO 11357-1 (2009) |
| Gelzeit in [min] | ist die Zeit, die seit Beginn des Mischvorgangs bis zum Erreichen des Gelpunktes vergeht. Der Gelpunkt wurde mit dem Gel Timer der Fa. Gelnorm bestimmt. |
| Verträglichkeit in [min] | ist die Zeit, die erforderlich ist, um unter Rühren die Reaktionskomponenten von einer trüben Emulsion in eine klare homogene Mischung zu überführen. |

## Patentansprüche

1. Verfahren zur Herstellung von Polyurethanhybridpolymeren, wobei Polyisocyanate (A) mit gegenüber Isocyanat reaktive Gruppen enthaltenden Verbindungen (B) und gegebenenfalls Kettenverlängerern und/oder Vernetzern (C) in Gegenwart von gegebenenfalls Katalysatoren (D) und gegebenenfalls Hilfs- und/oder Zusatzmitteln (E) in einem molaren Verhältnis von NCO-Gruppen zu OH-und/oderNH-Gruppen von 0,8 zu 1 bis 3,5 zu 1 zur Reaktion gebracht werden, **dadurch gekennzeichnet, dass**
i) als Polyisocyanat (A) ein NCO-Prepolymer mit einem NCO-Gehalt von 10 bis 40 Gew.-% eingesetzt wird,
welches aus mindestens einem Polyisocyanat (A') aus der Gruppe bestehend aus aliphatischen und aromatischen Polyisocyanaten und mindestens einer Polyolkomponente (B') aus der Gruppe bestehend aus Polystyrolpolyol mit einem zahlenmittleren Molekulargewicht von >1000 g/mol, bevorzugt >1500 g/mol, besonders bevorzugt 2000 g/mol und Polyacrylnitrilpolyol mit einem zahlenmittleren Molekulargewicht von >2000 g/mol, bevorzugt >3000 g/mol, und gegebenenfalls mindestens einem weiteren Polyol (B'') aus der Gruppe bestehend aus Polyesterpolyolen, Polyetherpolyolen und Polyetheresterpolyolen hergestellt ist, und
ii) als gegenüber Isocyanat reaktive Gruppen enthaltenden Verbindung (B) mindestens eine Verbindung aus der Gruppe bestehend aus Polyesterpolyolen, Polyetherpolyolen, Polyetheresterpolyolen und aminoterminierten Polyethern eingesetzt wird.

2. Polyurethanhybridpolymere aus Polyisocyanaten (A) und gegenüber Isocyanat reaktive Gruppen enthaltenden Verbindungen (B) in einem molaren Verhältnis von NCO-Gruppen zu OH-und/oderNH-Gruppen von 0,8 zu 1 bis 3,5 zu 1 hergestellt aus der Reaktion von
a) mindestens einem NCO-Prepolymer als Polyisocyanat (A)
b) mindestens einer gegenüber Isocyanat reaktive Gruppen enthaltenden Verbindung (B) aus der Gruppe bestehend aus Polyesterpolyolen, Polyetherpolyolen, Polyetheresterpolyolen und aminoterminierten Polyethern und
c) gegebenenfalls Kettenverlängerern und/oder Vernetzern (C) in Gegenwart von
d) gegebenenfalls Katalysatoren (D)
e) gegebenenfalls Hilfs- und/oder Zusatzmitteln (E),
wobei das NCO-Prepolymer einen NCO-Gehalt von 10 bis 40 Gew.-% aufweist und aus mindestens einem Polyisocyanat (A') aus der Gruppe bestehend aus aliphatischen und aromatischen Polyisocyanaten und mindestens einer Polyolkomponente (B') aus der Gruppe bestehend aus Polystyrolpolyol mit einem zahlenmittleren Molekulargewicht von >1000 g/mol, bevorzugt >1500 g/mol, besonders bevorzugt 2000 g/mol und Polyacrylnitrilpolyol mit einem zahlenmittleren Molekulargewicht von >2000 g/mol, bevorzugt >3000 g/mol, und gegebenenfalls mindestens einem weiteren Polyol (B") aus der Gruppe bestehend aus Polyesterpolyolen, Polyetherpolyolen und Polyetheresterpolyolen hergestellt ist.

3. Verwendung der Polyurethanbybridpolymere zur Herstellung von hydrophoben kompakten Beschichtungen und hydrophoben Hart- und Weichschäumen.
